Europäisches Patentamt

European Patent Office

Office européen des brevets

(11) Numéro de publication: **0 333 545**
**A1**

## (12) DEMANDE DE BREVET EUROPEEN

(21) Numéro de dépôt: **89400574.3**

(22) Date de dépôt: **01.03.89**

(51) Int. Cl.⁴: **A 01 B 15/14**

(30) Priorité: **02.03.88 FR 8802627**

(43) Date de publication de la demande:
**20.09.89 Bulletin 89/38**

(84) Etats contractants désignés: **BE DE FR GB**

(71) Demandeur: **SOCIETE DES CHARRUES BONNEL**
**Route Départementale 840**
**F-27110 Le Neubourg (FR)**

(72) Inventeur: **Bonnel, Daniel**
**Le Troncq**
**F-27110 Le Neubourg (FR)**

(74) Mandataire: **Rinuy, Santarelli**
**14, avenue de la Grande Armée**
**F-75017 Paris (FR)**

(54) **Charrue à largeur de travail variable.**

㉗ Une charrue à largeur de travail variable dans laquelle les moyens de liaison entre le dispositif d'attelage (1), la poutre principale (5) et la tige (9) comportent :
- un premier bras (10) articulé à une première extrémité sur le dispositif d'attelage (1) et à une deuxième extrémité sur la poutre (5) ;
- des moyens de commande du premier bras (10) et de la poutre (5), pour faire tourner le premier bras autour de sa première extrémité tout en faisant tourner la poutre en sens inverse autour de sa seconde extrémité, de la quantité nécessaire ;
- une tringlerie entre le dispositif d'attelage (1) et le support (8B) de l'un des corps de labourage, adaptée à maintenir ce support parallèle à lui-même.

FIG.1

EP 0 333 545 A1

**Description**

## CHARRUE A LARGEUR DE TRAVAIL VARIABLE

L'invention concerne une charrue à largeur de travail variable.

On connait déjà des charrues de ce type, qui comportent :
- un dispositif d'attelage sur un tracteur ;
- une poutre disposée en biais par rapport à l'axe de déplacement prévu pour le tracteur ;
- des corps de labourage devant être orientés parallèlement à cet axe de déplacement, articulés à intervalles réguliers sur la poutre par l'intermédiaire de supports respectifs articulés également chacun sur une tige de telle sorte que les quatre points d'articulation de chaque couple de supports sur la poutre et sur la tige forment les coins d'un parallélogramme articulé ;
- et des moyens de liaison entre le dispositif d'attelage, la poutre et la tige adaptés, lorsque l'on fait varier l'orientation de la poutre sur au moins une plage donnée, à ce que les corps de labourage gardent leur orientation, et à ce que la variation de la largeur de raie soit égale à la variation de la largeur de première raie.

En faisant varier l'orientation de la poutre, on fait varier la largeur de raie de la charrue - c'est-à-dire l'écartement transversal régnant entre deux corps de labourage successifs - et donc la largeur de travail de la charrue, tout en respectant ses conditions de fonctionne ment, d'une part l'orientation des corps de labourage parallèlement à l'axe de déplacement prévu pour le tracteur, et d'autre part l'égalité entre la largeur de raie et la largeur de première raie, c'est-à-dire l'écartement transversal régnant entre le premier corps de labourage (celui qui est situé le plus en avant de la charrue) et le flanc intérieur de la roue du tracteur la plus proche du premier corps.

Les moyens de liaison entre le dispositif d'attelage, la poutre et la tige des charrues connues donnent satisfaction à l'usage, mais leur structure est relativement complexe, ils ont donc un coût de fabrication élevé.

L'invention vise à fournir une charrue à largeur de travail variable dont les moyens de liaison aient une structure plus simple et plus facile à fabriquer. Elle propose à cet effet une charrue se caractérisant en ce que les moyens de liaison entre le dispositif d'attelage, la poutre et la tige comportent :
- un premier bras articulé à une première extrémité sur le dispositif d'attelage et à une deuxième extrémité sur la poutre ;
- des moyens de commande du premier bras et de la poutre, pour faire tourner le premier bras autour de sa première extrémité tout en faisant tourner la poutre en sens inverse autour de sa seconde extrémité, de la quantité nécessaire ;
- une tringlerie entre le dispositif d'attelage et le support de l'un des corps de labourage, adaptée à maintenir ce support parallèle à lui-même dans ladite plage donnée.

Les corps de labourage restent donc parallèles à l'axe de déplacement prévu pour le tracteur, puisqu'ils restent parallèles à eux-mêmes grâce à la coopération en parallélogramme des supports avec la poutre et la tige.

Si le premier bras était encastré sur la poutre, celle-ci tournerait simplement autour du point d'articulation du premier bras sur le dispositif d'attelage, la largeur de première raie et la largeur de raie varieraient dans le même sens, mais d'une quantité trop importante pour la largeur de raie et d'une quantité pas assez importante pour la largeur de première raie. La rotation inverse que propose l'invention pour la poutre autour du premier bras fait varier la largeur de première raie dans le même sens, mais fait varier la largeur de raie en sens contraire, de sorte que l'on arrive à obtenir l'égalité recherchée entre les variations de ces largeurs en effectuant cette rotation inverse suivant la quantité appropriée grâce aux moyens de commande du premier bras et de la poutre.

Ceux-ci sont réalisables par de simples leviers articulés entre eux. Ils comportent par exemple, suivant un mode d'exécution qui donne de bons résultats :
- un bras de réglage à longueur réglable articulé à une première extrémité sur le dispositif d'attelage en un point distinct du point d'articulation du premier bras, et à une seconde extrémité sur le premier bras ;
- un deuxième bras encastré axialement au bras de réglage, le prolongeant au-delà de ladite première extrémité ;
- un troisième bras encastré transversalement à la poutre ;
- et un quatrième bras articulé à une première extrémité sur le deuxième bras et à une seconde extrémité sur le troisième bras.

On notera que de tels moyens de commande à simples leviers articulés sont particulièrement aisés à fabriquer.

Les caractéristiques, particularités et avantages de l'invention apparaitront au cours de la description d'exemples de réalisation de l'invention, donnés ci-après à titre non limitatif en référence aux dessins annexés.

Sur ces dessins :
- la figure 1 est une vue en plan d'une charrue conforme à l'invention, dont la largeur de raie est réglée à 12 pouces, attelée derrière un tracteur dont les roues arrières sont espacées de 1,50m ;
- la figure 2 est un schéma mettant en évidence les relations géométriques existant entre certains points d'articulation de la charrue, dans la configuration de la figure 1 ;
- la figure 3 est une vue similaire à la figure 1 pour une largeur de raie de 20 pouces ;
- la figure 4 est un schéma montrant le positionnement de la poutre par rapport au premier bras, en traits continus pour la configuration de la figure 1 et en traits interrompus pour celui de la figure 2 ; - la figure 5 est une vue similaire à la figure 1 pour un tracteur dont les roues arrières sont espacées de 1,35m ;
- la figure 6 est une vue similaire à la figure montrant une variante pour la tringlerie entre le dispositif d'attelage et le support de l'un des corps de labourage.

La charrue représentée sur les figures comporte un dispositif d'attelage 1 comportant un té renversé 2 d'attelage en trois points à tracteur dont on a matérialisé l'emplacement des roues arrières 7A et 7B. Sur le segment horizontal du té, un pivot 3 est monté à rotation autour d'un axe destiné à se superposer à l'axe de déplacement 4 prévu pour le tracteur, ce pivot étant commandé par un dispositif prévu pour lui faire effectuer des demi-tours afin de retourner la charrue avant qu'on inverse le sens de déplacement du tracteur, d'une façon bien connue.

La poutre 5 est disposée en biais par rapport à l'axe 4 et porte cinq corps de labourage dont seuls les trois premiers 6A à 6C sont montrés sur les figures.

Dans la configuration illustrée, la charrue est correctement réglée, puisque les corps de labourage sont parallèles à l'axe 4 et que la largeur de raie L - c'est-à-dire l'écartement transversal entre deux corps de labourage successifs - est égale à la largeur de première raie L1, c'est-à-dire l'écartement transversal entre le premier corps de labourage 6A et le flanc intérieur de la roue arrière la plus proche du tracteur, ici 7B.

Les cinq corps de labourage sont articulés à intervalles réguliers sur la poutre 5 par l'intermédiaire de supports respectifs, 8A à 8C pour les corps 6A à 6C. Chacun des supports est également articulé sur une tige 9, de telle sorte que les quatre points d'articulation de chaque couple de supports sur la poutre et sur la tige forment les coins d'un parallélogramme articulé, ce qui fait que les corps de labourage restent parallèles entre eux.

Conformément à l'invention, cette charrue comporte comme moyens de liaison entre le dispositif d'attelage, la poutre et la tige :
- un premier bras 10 articulé à une première extrémité en A sur le dispositif d'attelage 1 - et plus précisément sur le pivot 3 - et à une deuxième extrémité en B sur la poutre 5 ;
- des moyens de commande du premier bras 10 et de la poutre 5, pour faire tourner le premier bras autour de A tout en faisant tourner la poutre en sens inverse autour de B, de la quantité nécessaire.
- une tringlerie entre le dispositif d'attelage 1 et le support 8B du deuxième corps de labourage 6B, adaptée à maintenir ce support parallèle à lui-même lorsqu'on fait varier l'orientation de la poutre dans une plage donnée.

Dans cet exemple de réalisation, les moyens de commande du premier bras 10 et de la poutre 4 comportent un bras de réglage 11 à longueur réglable articulé à une première extrémité sur le dispositif d'attelage 1 en un point F distinct du point A, et à une seconde extrémité en G sur le premier bras 10 ; un deuxième bras 12 encastré axialement au bras de réglage 11, le prolongeant au-delà de ladite première extrémité ; un troisième bras 13 encastré transversalement à la poutre 5 ; et un quatrième bras 14 articulé à une première extrémité en E sur le deuxième bras 12 et à une seconde extrémité en H sur le troisième bras 13.

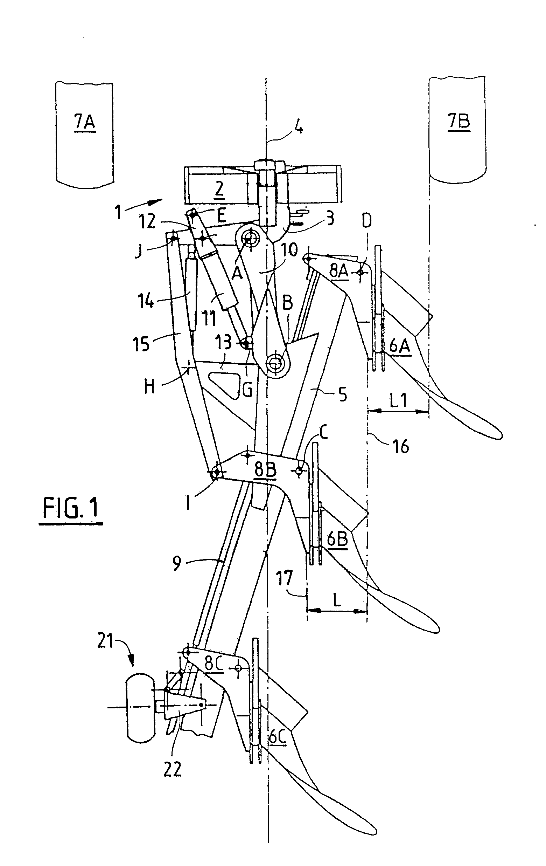

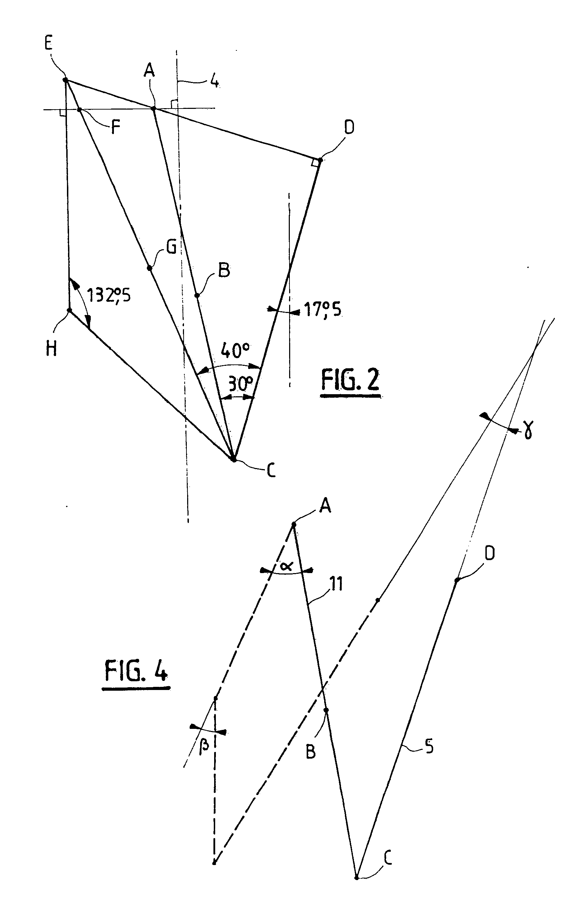

Les relations géométriques existant entre certains points d'articulation de la charrue dans la configuration de la figure 1 sont mises en évidence sur la figure 2.

On observera que, très sensiblement :
- les points d'articulation A et B du premier bras 10 sont alignés avec le point d'articulation C du deuxième corps de labourage 6B sur la poutre, le point d'articulation B du premier bras sur la poutre 5 étant situé sensiblement à égale distance du point A et du point C ;
- le triangle ayant pour sommets les points A C et le point D d'articulation du premier corps de labourage sur la poutre, est un triangle rectangle au point D et faisant un angle de 30° au point C ;
- les points d'articulation E, F et G de l'ensemble formé par le bras de réglage 11 et le deuxième bras 12 sont alignés avec le point C, le point d'articulation G du bras de réglage sur le premier bras 10 étant situé sensiblement à égale distance du point d'articulation E des deuxième et quatrième bras et du point d'ar ticulation C ;
- le triangle ayant pour sommets les points d'articulation C, D et E est un triangle rectangle au point D et faisant un angle de 40° au point C ;
- le triangle ayant pour sommets les points C, E et le point d'articulation H entre les troisième et quatrième bras 13 et 14 est un triangle isocèle faisant un angle d'environ 132,5° au point d'articulation H ;
- la poutre 5 est orientée à 17,5° par rapport à l'axe de déplacement 4, le quatrième bras 14 est parallèle à cet axe et la droite passant par les points d'articulation A et F est perpendiculaire à cet axe.

La tringlerie entre le dispositif d'attelage 1 et le support de l'un des corps de labourage comporte un levier rigide 15 articulé à une première extrémité en J sur le dispositif d'attelage et à une seconde extrémité en I sur le support. Ce support est celui du deuxième corps de labourage 8B et le quadrilatère ayant pour sommets les points d'articulation C,I,J,A, est sensiblement un parallélogramme.

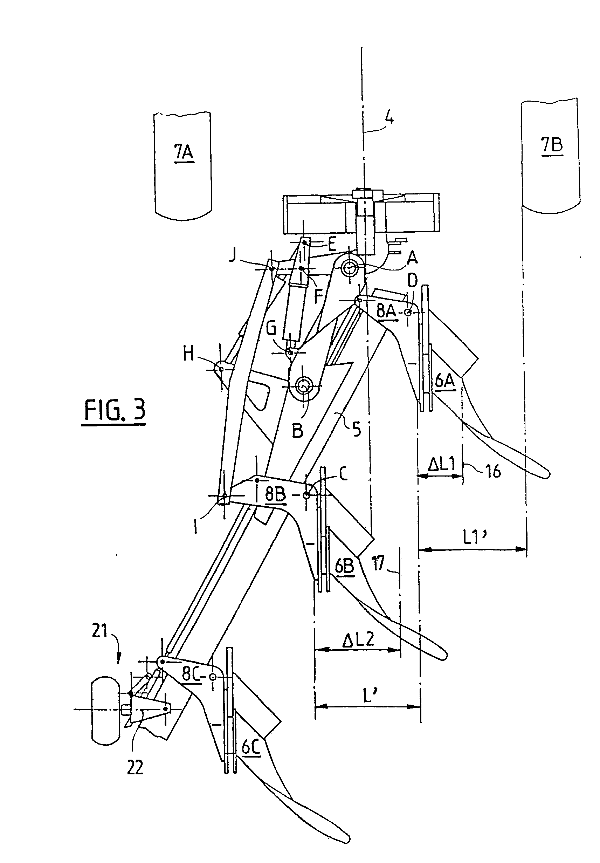

La figure 3 montre la même charrue attelée derrière le même tracteur, mais réglé pour une largeur de raie L' plus grande. Pour passer de la configuration de la figure 1 à celle de la figure 3, on a simplement raccourci la longueur du bras de réglage 11, c'est-à-dire, en l'occurence, qu'on a fait rentrer la tige du vérin hydraulique avec lequel est réalisé ce bras.

Les corps de labourage sont restés parallèles à l'axe 4 et la largeur de première raie a augmenté de la même quantité que la largeur de raie, la condition d'égalité de ces largeurs s'est conservée, on a $L' = L'1$.

La position transversale occupée par les premier et deuxième corps de labourage dans les conditions de la figure 1 sont respectivement indiquées par les lignes en traits mixtes 16 et 17, ainsi que la variation de la longueur de première raie $\Delta L1$ qui correspond au déplacement transversal du premier corps de labourage, et le déplacement transversal du deuxième corps de labourage $\Delta L2$.

Etant donné que d'une façon générale, la variation de largeur de raie $\Delta L$ est égale à $\Delta L2 - \Delta L1$, et que la condition de réglage de la charrue est que $\Delta L = \Delta L1$, cette condition revient à obtenir que $\Delta L2 = 2\Delta L1$, ou encore que le déplacement transversal du point d'articulation C soit égal au double du déplacement transversal du point d'articulation D.

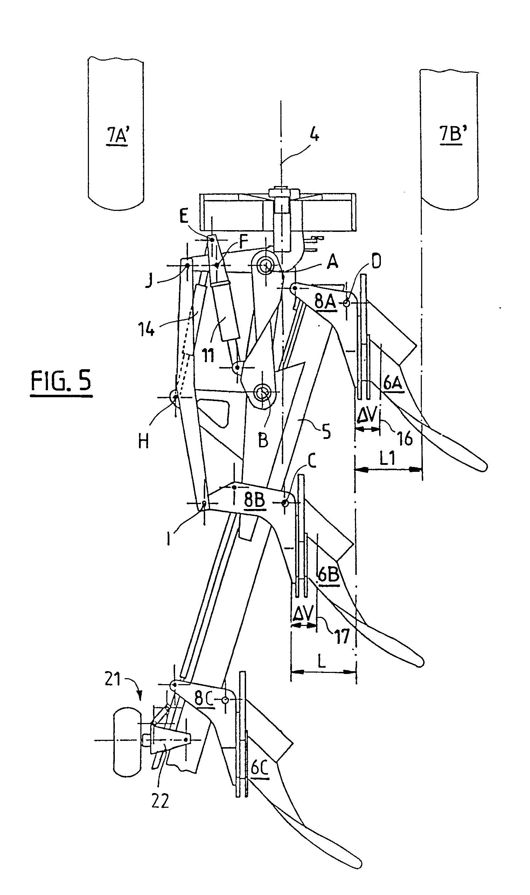

On voit sur la figure 4 que pour passer de la configuration de la figure 1 (traits pleins) à la configuration de la figure 2 (traits interrompus), le bras de réglage 11 a tourné autour du point A d'un angle $\alpha$ et que la poutre 5 a tourné autour du point B en sens inverse d'un angle $\beta$, et que l'on a obtenu la variation $\gamma$ de l'inclinaison de la poutre 5, égale à la différence entre $\alpha$ et $\beta$.

Si les moyens de liaison avaient été rigides en B, la poutre 5 aurait tourné simplement autour du point A, les points C et D se seraient déplacés dans le même sens, et le déplacement du point D serait inférieur à deux fois à celui du point C, mais grâce à la rotation effectuée en sens inverse autour du point B, le déplacement du point D a une variation supplémentaire dans le sens d'une augmentation tandis que le déplacement du point C a une variation supplémentaire dans le sens d'une diminution, qui a permis d'arriver à ce que le déplacement latéral du point D soit égal à la moitié du déplacement latéral du point C.

Dans cet exemple, le bras de réglage 11 a tourné autour de A de 35,5° et la poutre de 23° autour du point B, ce qui fait que la poutre a eu une variation de son inclinaison de 12,5°.

Le quatrième bras 14 est réable en longueur afin de permettre l'utilisation de la charrue sur des tracteurs ayant des différences dans l'écartement de leurs roues arrières.

On voit sur la figure 5 que la charrue des figures 1 et 2 est réglée à la même largeur de travail que sur la figure 1. mais pour un tracteur ayant un écartement plus petit entre ses roues arrières 7A' et 7B' matérialisées sur la figure. La position transversale occupée par les premier et les deuxième corps de labourage dans les conditions de la figure 1 sont respectivement indiquées en traits mixtes par les lignes 16 et 17, ainsi que le déplacement transversal $\Delta V$ nécessaire pour chaque corps afin de régler la charrue. égal à la moitié de la différence d'écartement entre les roues arrières des tracteurs.

Le réglage est obtenu en agissant sur le bras de réglage 11 puis sur le quatrième bras 14 pour donner l'angle correct à la poutre 5. On peut faire alors varier la largeur de travail de la charrue, celle-ci restera réglée.

Compte-tenu de l'amplitude des plages de variation habituelles pour une charrue à largeur variable, on obtient des résultats très satisfaisants dans le maintien du parallélisme des corps de labourage avec la tringlerie montrée sur les figures 1, 3 et 5, malgré la déformation que subit en B le "parallélogramme" A, C, I J.

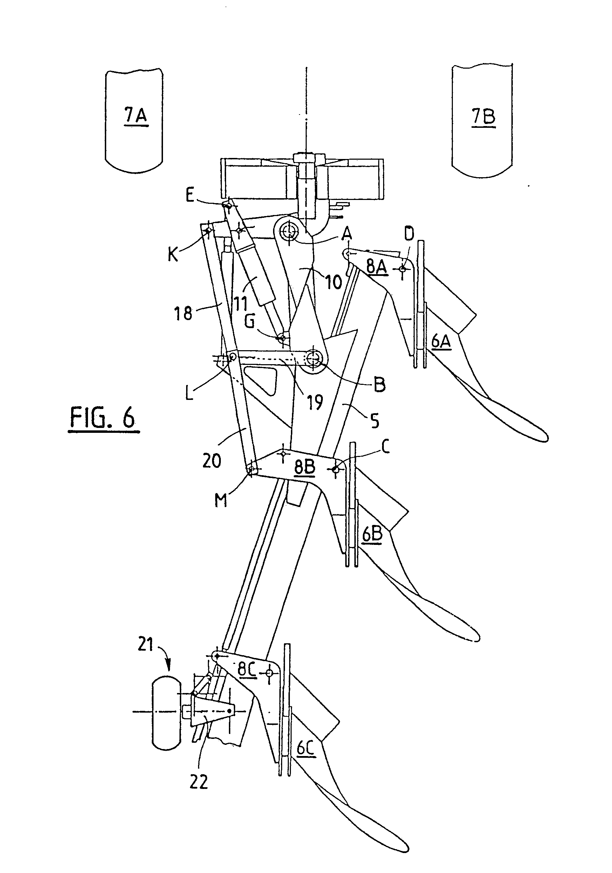

On peut toutefois utiliser la variante représentée sur la figure 6 si l'on désire un meilleur parallélisme, la tringlerie de cette variante comportant un premier, un deuxième et un troisième levier 18 à 20, articulés entre eux en L à une première de leurs extrémités, le premier levier 18 étant articulé à une seconde extrémité en K sur le dispositif d'attelage 1, le deuxième levier au point d'articulation B et le troisième levier sur le support 8B du deuxième corps de labourage en un point M; le quadrilatère ayant pour sommets les points A, K, L et B étant un parallélogramme, ainsi que le quadrilatère ayant pour sommets les points d'articulation C, M, L et B.

On obtient ainsi un maintien rigoureux du levier 19 et de la droite passant par les points d'articulation M et C parallèles à la droite passant par les points d'articulation A et K, c'est-à-dire un maintien rigoureux des corps de labourage parallèles à l'axe 4. On notera que les exemples de charrues illustrés comportent une roue de réglage de profondeur 21 montée sur un support 22 articulé sur la poutre 5 et sur la tige 9, ce qui fait que cette roue reste aussi parallèle à l'axe 4 et lorsqu'on fait varier l'inclinaison de la poutre 5.

Bien entendu, l'invention ne se limite pas aux exemples de réalisation décrits et représentés sur les figures, mais englobe au contraire toutes les variantes que l'homme de métier pourra déterminer.

## Revendications

1. Charrue comportant :
- un dispositif d'attelage (1) sur un tracteur;
- une poutre (5) disposée en biais par rapport à l'axe de déplacement (4) prévu pour le tracteur ;
- des corps de labourage (6A, 6B, 6C) devant être orientés parallèlement à cet axe de déplacement, articulés à intervalles réguliers sur la poutre (5) par l'intermédiaire de supports respectifs (8A,8B,8C) articulés également chacun sur une tige (9) de telle sorte que les quatre points d'articulation de chaque couple de supports sur la poutre et sur la tige forment les coins d'un parallélogramme articulé ;
- et des moyens de liaison entre le dispositif d'attelage, la poutre et la tige adaptés, lorsque l'on fait varier l'orientation de la poutre sur au moins une plage donnée, à ce que les corps de labourage gardent leur orientation, et à ce que la variation de la largeur de raie soit égale à la variation de la largeur de première raie ; cette charrue étant caractérisée en ce que lesdits moyens de liaison comportent :
- un premier bras (10) articulé à une première extrémité sur le dispositif d'attelage (1) et à une deuxième extrémité sur la poutre (5);
- des moyens de commande du premier bras (10) et de la poutre (5), pour faire tourner le premier bras autour de sa première extrémité tout en faisant tourner la poutre en sens inverse autour de sa seconde extrémité, de la quantité nécessaire ;
- une tringlerie entre le dispositif d'attelage (1) et le support (8B) de l'un des corps de labourage, adaptée à maintenir ce support parallèle à lui-même dans ladite plage donnée.

2. Charrue selon la revendication 1, caractérisée en ce que lesdits moyens de commande du premier bras et de la poutre comportent :
- un bras de réglage (11) à longueur réglable articulé à une première extrémité sur le dispositif d'attelage (1) en un point distinct du point d'articulation du premier bras, et à une seconde extrémité sur le premier bras (10) ;
- un deuxième bras (12) encastré axialement au bras de réglage (11), le prolongeant au-delà de ladite première extrémité ;
- un troisième bras (13) encastré transversalement à la poutre (5)
; - et un quatrième bras (14) articulé à une première extrémité sur le deuxième bras et à une seconde extrémité sur le troisième bras.

3. Charrue selon la revendication 2, caractérisée en ce que ses moyens de commande du premier bras et de la poutre admettent une configuration dans laquelle, très sensiblement :
- les points d'articulation (A,B) du premier bras (10) sont alignés avec le point d'articulation (C) du deuxième corps de labourage (6B) sur la poutre, le point d'articulation (B) du premier bras sur la poutre (5) étant situé sensiblement à égale distance du point d'articulation (A) du premier bras sur le dispositif d'attelage et du point d'articulation (C) du deuxième corps de labourage sur la poutre ;
- le triangle ayant pour sommets le point d'articulation (A) du premier bras (10) sur le dispositif d'attelage (1) et les points d'articulation (D,C) respectifs des premier et deuxième corps de labourage (6A,6B) sur la poutre, est un triangle rectangle au point d'articulation (D) du premier corps de labourage sur la poutre et faisant un angle de 30° au point d'articulation (C) du deuxième corps de labourage sur la poutre ;
- les points d'articulation (E,F,G) de l'ensemble formé par le bras de réglage (11) et le deuxième bras (12) sont alignés avec le point d'articulation (C) du deuxième corps de labourage (6B) sur la poutre (5), le point d'articulation (G) du bras de réglage, sur le premier bras (10) étant situé sensiblement à égale distance du point d'articulation (E) des deuxième et quatrième bras (12,14) et du point d'articulation (C) du deuxième corps de labourage sur la poutre ;
- le triangle ayant pour sommets le point d'articulation (E) des deuxième et quatrième bras et les points d'articulation respectifs (D,C) des premier et deuxième corps de labourage sur la poutre est un triangle rectangle au point d'articulation (D) du premier corps de labourage sur la poutre et faisant un angle de 40° au point d'articulation (C) du deuxième corps de labourage sur la poutre ;
- le triangle ayant pour sommets le point d'articulation (E) des deuxième et quatrième bras, le point d'articulation (C) du deuxième corps de labourage sur la poutre et le point d'articulation (H) entre les troisième et quatrième bras (14,13) est un triangle isocèle faisant un angle d'environ 132,5° au point d'articulation (H) des troisième et quatrième bras ;

- la poutre (5) est orientée à 17,5° par rapport à l'axe de déplacement prévu pour le tracteur, le quatrième bras (14) est parallèle à cet axe et la droite passant par les points d'articulation respectifs (A,F) du premier bras et du bras de réglage sur le dispositif d'attelage (1) est perpendiculaire audit axe (4).

4. Charrue selon l'une quelconque des revendications 1 à 3, caractérisée en ce que ladite tringlerie entre le dispositif d'attelage et le support de l'un des corps de labourage (8B) comporte un levier rigide (15) articulé à une première extrémité sur le dispositif d'attelage (1) et à une seconde extrémité sur ledit support (8B).

5. Charrue selon la revendication 4, caractérisée en ce que ledit support est celui du deuxième corps de labourage (8B), le quadrilatère ayant pour sommet le point d'articulation (C) du deuxième corps de labourage sur la poutre, le point d'articulation (I) du support de ce dernier avec ledit levier rigide (15) et les points d'articulation respectifs (J,A) de ce levier et du premier bras (10) sur le dispositif d'attelage, est sensiblement un parallélogramme.

6. Charrue selon l'une quelconque des revendications 1 à 3, caractérisée en ce que ladite tringlerie entre le dispositif d'attelage (1) et le support (8B) de l'un des corps de labourage comporte un premier, un deuxième et un troisième leviers (18,19,20) articulés entre eux à une première de leurs extrémités, le premier levier (18) étant articulé à une seconde extrémité sur le dispositif d'attelage(1), le deuxième levier au point d'articulation entre le premier bras (10) et la poutre (5) et le troisième levier (20) sur le support (8B) du deuxième corps de labourage ; le quadrilatère ayant pour sommet les points d'articulation respectifs (A,K) du premier bras (10) et du premier levier (18) sur le dispositif d'attelage (1), le point d'articulation (L) du premier et du deuxième levier (18,19) et le point d'articulation (B) du deuxième levier (19) et du premier bras (10) étant un parallélogramme ; ainsi que le quadrilatère ayant pour sommet les points d'articulation (C,M) du support (8B) du deuxième corps de labourage respectivement sur la poutre (5) et sur le troisième levier (20), le point d'articulation (L) entre les deuxième et troisième leviers (19,20) et le point d'articulation (B) entre le deuxième levier (10) et la poutre (5).

7. Charrue selon l'une quelconque des revendications 1 à 6, caractérisée en ce que le quatrième bras (14) est réglable en longueur, afin de permettre l'adaptation de la charrue à des tracteurs ayant des différences dans l'écartement de leurs roues arrières.

8. Charrue selon l'une quelconque des revendications 1 à 7, caractérisée en ce qu'elle comporte une roue de réglage de profondeur (21) montée sur un support (22) articulé sur la poutre (5) et sur la tige (9).

FIG.1

FIG. 2

FIG. 4

FIG. 3

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | EP-A-0200489 (RANSOMES SIMS & JEFFERIES) * colonne 7, ligne 5 - colonne 8, ligne 42; figures 6, 7 * | 1 | A01B15/14 |
| A | | 2 | |
| | --- | | |
| A | GB-A-2122464 (KVERNELAND A/S) | | |
| | --- | | |
| A | GB-A-2172782 (AKTIEBOLAG OVERUMS BRUK) | | |
| | --- | | |
| A | DE-C-3345231 (XAVER FENDT & CO) | | |
| | ----- | | |

**DOMAINES TECHNIQUES RECHERCHES (Int. Cl.4 )**

A01B

Le présent rapport a été établi pour toutes les revendications

| Lieu de la recherche | Date d'achèvement de la recherche | Examinateur |
|---|---|---|
| LA HAYE | 12 JUIN 1989 | VON ARX V.U. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................................
& : membre de la même famille, document correspondant

EPO FORM 1503 03.82 (P0402)